# EUROPÄISCHE PATENTSCHRIFT

(11) **EP 1 500 525 B1**
(45) Veröffentlichungstag und Bekanntmachung des Hinweises auf die Patenterteilung: **26.08.2009**
(21) Anmeldenummer: 04015015.3
(22) Anmeldetag: 25.06.2004
(51) Int. Cl.: B60B 35/06, B60B 35/08

(54) **Starrachse eines Fahrzeugs, insbesondere liftbare Vor- oder Nachlaufachse eines Lastkraftwagens oder Omnibusses**
Rigid axle for a vehicle, in particular a leading or trailing retractable axle for trucks or busses
Essieu rigide pour un véhicule, notamment un essieu rétractable poussé ou trainé pour poids lourd ou autobus

(30) Priorität: 24.07.2003 DE 10333760
(43) Veröffentlichungstag der Anmeldung: 26.01.2005
(73) Patentinhaber: MAN Nutzfahrzeuge Aktiengesellschaft, 80995 München (DE)
(72) Erfinder: Wittmann, Thomas, Dipl.-Ing. (FH), 86368 Gersthofen (DE); Greinöcker, Wolfgang, Ing., 85551 Kirchheim (DE); Diehl, Ernst-Ludwig, Dipl.-Ing. (FH), 81247 München (DE)

(56) Entgegenhaltungen:
- DE-A1- 19 920 670
- US-A- 6 158 750
- US-B1- 6 398 236

## Beschreibung

Die Erfindung betrifft eine Starrachse für ein Fahrzeug mit gattungsgemäßen Merkmalen der im Oberbegriff des Anspruchs 1 angegebenen Art.

Die Erfindung geht aus von einer Starrachse mit einer Bauart des Achskörpers wie aus der GB 2258850 B bekannt. Solche Starrachsen kommen mit zugehörigen Lenkern, Federn und Dämpfern und einer Lifteinrichtung in serienmäßigen Lastkraftwagen der Anmelderin als Vorlaufachse zur Anwendung. Der Starrachskörper hierfür wird aus einem Rohr mit Kreisquerschnitt und 121 mm Durchmesser sowie 12,5 mm Wandstärke kalt gebogen. Ersichtlicherweise ist das Biegen eines solchermaßen dimensionierten Rohres aufwendig und kompliziert, die nötigen Werkzeuge sind insbesondere wegen der notwendig hohen Umformkräfte äußerst teuer und auch die geforderte Qualität, insbesondere Rundheit über die ganze Länge fordert ihren Tribut. Ein Ovalisieren an bestimmten Biegestellen ist nahezu nicht vermeidbar. Außerdem setzen die Schweißnähte, mit denen die Lagerböcke bzw. Konsolen für die spätere Anbringung der Lenker, Federungs- und Dämpferorgane die Festigkeit herab. Auch ist die Bodenfreiheit des Fahrzeugs bei einem Rohr-Durchmesser von über 120 mm im Bereich des Achskörpers der Starrachse sehr knapp bemessen.

Des Weiteren ist aus der DE 199 20 670 A1 eine Starrachse eines Fahrzeugs, insbesondere liftbare Vor- oder Nachlaufachse eines Lastkraftwagens oder Omnibusses bekannt, deren Achskörper aus drei Teilen zusammengesetzt ist und zwar einem gegossenen Mittelteil und zwei Seitenteilen, die am Mittelteil angeschweißt sind. Alle Starrachsteile sind als einstückige Sphäro-Gussteile aus GGG 40 hergestellt angegeben. Das Mittelteil dieses Starrachskörpers ist nach Art eines rechteckigen Kastenrahmens ausgebildet, der mit einem Durchlass für eine Gelenkwelle versehen ist. Dieses Mittelteil ist vergleichsweise aufwendig konstruiert, relativ schwer und teuer.

Es ist daher Aufgabe der Erfindung, für eine Starrachse der gattungsgemäßen Art eine andere als die vorstehend erwähnte Bauart zu schaffen, die eine günstigere, billigere und prozesssichere Herstellung des Starrachskörpers ermöglicht und eine Reihe weiterer Vorteile erbringt.

Diese Aufgabe ist bei einer Starrachse der gattungsgemäßen Art erfindungsgemäß durch einen Starrachskörper mit den im Kennzeichen des Anspruchs 1 angegebenen Merkmalen gelöst.

Vorteilhafte Ausgestaltungen und Details des erfindungsgemäßen Starrachskörpers sind in den Unteransprüchen gekennzeichnet.

Die Vorteile der Erfindung sind des besseren Verständnisses wegen erst am Ende der Beschreibung angegeben, in der die Erfindung anhand eines in der Zeichnung dargestellten Ausführungsbeispiels näher erläutert ist.

In der Zeichnung zeigen:
- Fig. 1: ein Ausführungsbeispiel des erfindungsgemäßen Achskörpers samt Anbauten in Ansicht von hinten,
- Fig. 2: den Achskörper von Fig. 1 in Draufsicht,
- Fig. 3: den Schnitt A-A durch den Achskörper von Fig. 1
- Fig. 4: den Schnitt B-B durch den Achskörper von Fig. 1, und

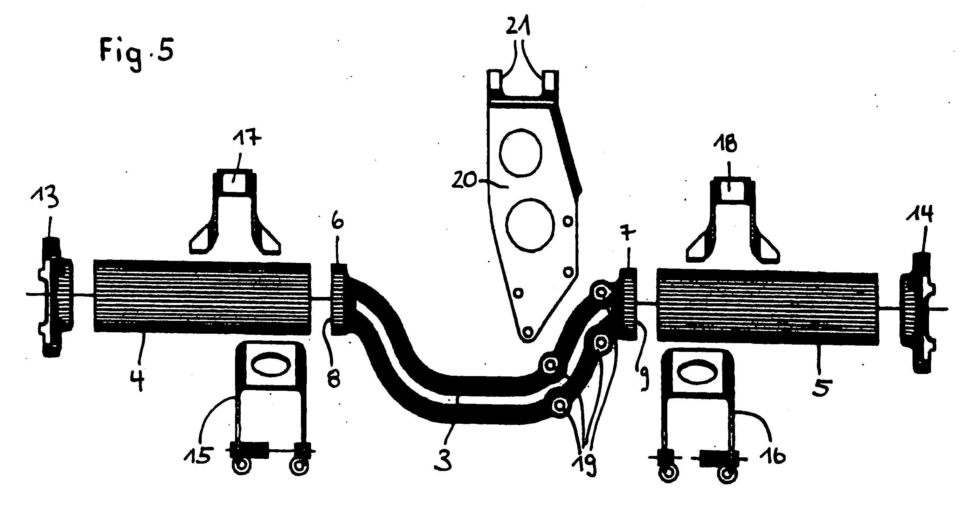

- Fig. 5: die Teile des Achskörpers von Fig. 1 und die an diesen anzubauenden Teile in Einzeldarstellung vor ihrem Zusammenbau.

Dem dargestellten Ausführungsbeispiel liegt eine Starrachse eines Fahrzeugs, hier einer liftbaren Vor- oder Nachlaufachse eines Lastkraftwagens oder Omnibusses zugrunde, die zu einer angetriebenen Achse benachbart und von einer Antriebswelle 1 überquert ist, die zu der angetriebenen Achse hinführt. Die Starrachse weist einen Achskörper 2 auf, der in seinem Mittelbereich nach unten ausgebuchtet ist, um dort von der Antriebswelle 1 mit Abstand oben überquert und auch - ohne diese zu berühren - angehoben bzw. geliftet werden zu können.

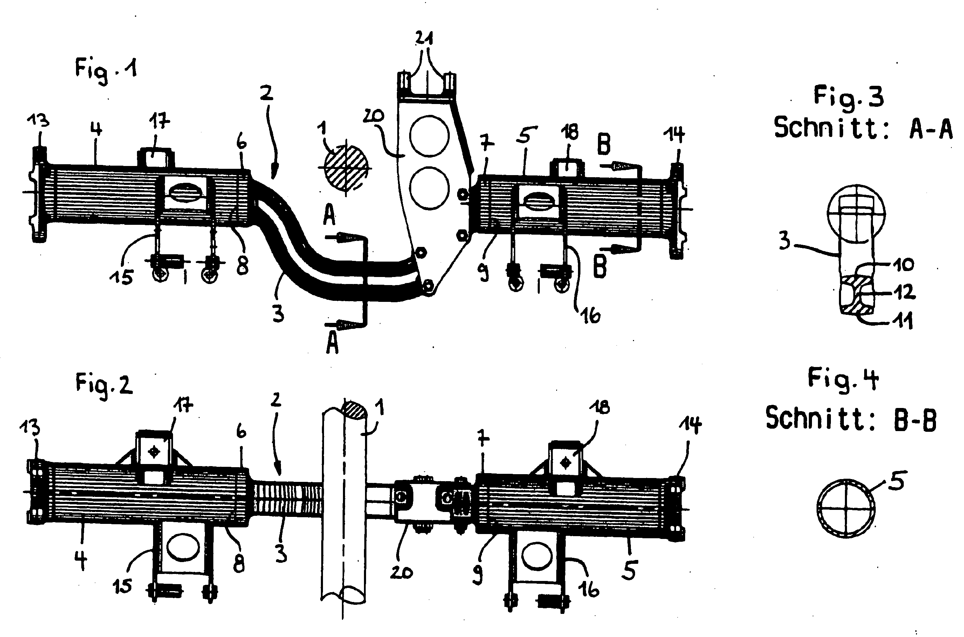

Erfindungsgemäß ist der Achskörper 2 der Starrachse gebaut und aus drei vorgefertigten Teilen zusammengesetzt, und zwar einem geschmiedeten oder gegossenen, nach Art eines Joches gestalteten Mittelteil 3 sowie zwei durch Rohrstücke gebildeten Seitenteilen 4, 5, die am Mittelteil 3 angeschweißt sind. Das Mittelteil 3 ist einstückig aus hochfestem Stahlmaterial hergestellt. Es weist an seinen beiden Enden massive plattenförmige Flansche 6, 7 auf, deren Umfangsform und -größe jener der anzuschweißenden Seitenteile 4, 5 entspricht und deren Anschlussflächen vertikal parallel zueinander angeordnet sind. Zwischen seinen beiden Flanschen 6, 7 hat das Mittelteil 3 entweder einen Doppel-T-Querschnitt mit oben und unten gegebenen Querstegen 10, 11 und einem Vertikalsteg 12 dazwischen - siehe Fig. 3 - oder einen nach unten offenen Rechteck-Querschnitt, aber auch ein geschlossener Rechteck-Querschnitt ist bei Guss-Ausführung möglich.

Die beiden durch Rohrstücke aus, z. B. hochfestem, Stahlmaterial gebildeten Seitenteile 4, 5 des Achskörpers 2 weisen ebenso wie die Flansche 6, 7 außen am Mittelteil 3 vorzugsweise einen kreisrunden Querschnitt auf, siehe Fig. 4.

An jedem der beiden Seitenteile 4, 5 des Achskörpers 2 ist im Fall der dargestellten Beispiels
- endseitig außen ein Anschlussflansch 13, 14 angeschweißt, an dem ein Radträger befestigbar ist,
- an einer Stelle des Umfangs ein Haltebock 15, 16 angeschweißt, an dem ein unterer Längslenker anlenkbar ist, und
- an anderer Stelle des Umfangs ein Abstützplateau 17, 18 angeschweißt ist, auf dem eine Luftfeder abgestützt anbaubar ist.

Am Mittelteil 3 des Achskörpers 2 sind im Fall des dargestellten Beispiels Anlageflächen 19 für das durch Anschweißen oder Anschrauben (wie dargestellt) erfolgende Anschließen einer nach oben abragenden Konsole 20 vorgesehen. Diese Konsole bildet die Basis oder ein Mittel für das Anlenken eines oberen Dreiecklenkers und eines Halters, an dem ein zum Heben und Senken (Liften) der Starrachse dienender Liftbalg oben abgestützt ist. Unten ist dieser Liftbalg an einem rahmenfesten Halter abgestützt. Der Liftbalg wirkt vertikal zwischen den Einspannstellen des rahmenfesten und achskörperfesten Halters. Der Dreieckslenker ist dabei zwischen zwei obenendig an der Konsole 20 gegebenen Lagerwangen 21 z. B. über ein Pratzengelenk an der Konsole 20 anschließbar. Der achskörperseitige Halter ist seitlich außen an der Konsole 20 befestigbar und hat die Form eines Galgens.

Aufgrund dieser erfindungsgemäßen Bauart des Achskörpers ergeben sich für diesen gegenüber einem gebogenen Achskörper der aus der GB 2258850 B bekannten Bauart folgende Vorteile:
A) Vorteile allgemeiner Art:
   - Höhere Fertigungs-Prozesssicherheit für den Achskörper 2 mit Rohr-Ø > ca. 130 mm,
   - kein Festigkeitsverlust hinsichtlich Ovalität in Rohrbögen (besonders bei Rohr-Ø > ca. 130 mm),
   - mehr Bodenfreiheit und verringertes Achskörpergewicht durch entsprechende Gestaltung des Querschnitts im Achskörper-Mittelteil 3,
   - höhere Anzahl von Gleichteilen (die Halterungen für die Anlenkung der Achse können z. B. von einer nicht gekröpften Achse mit gleichem Rohr- Ø verwendet werden),
   - im Bereich des Achskörper-Mittelteils 3 besteht Befestigungsmöglichkeit für Halter/Konsole mittels Schraubverbindung.
B) Vorteile konkreter Art gegenüber der bisherigen Serienachse:
   - Entfall von aufwändigen Anpassungsarbeiten der Anschweißteile (höhere Prozesssicherheit in der Fertigung) → geringere Herstellkosten
   - höhere Festigkeit durch:
      o Umstieg von Rohr-Ø 121x12.5 auf Rohr-Ø 150x10
      o Wegfall von festigkeitsmindernden Rohrbögen
      o Wegfall von versagenskritischen Schweißnähten innerhalb von Rohrbögen (Lagerbock- und Dreieckslenkerkonsolen-Schweißnähte)
   - bessere rechnerische Beurteilung der Festigkeit durch Entfall der Schweißnaht an der Dreieckslenkerkonsole
   - leichte Austauschbarkeit der Dreieckslenkerkonsole im Reparaturfall und Baukasten-Bauweise
   - die Bodenfreiheit erhöht sich um ca. 10 mm
   - viele Gleichteile mit einer geraden Nachlaufachse mit gleichem Achsrohr- Ø = 150x10.

### Bezugszeichenliste

- 1: Antriebswelle
- 2: Achskörper
- 3: Mittelteil von 2
- 4: Seitenteil links von 2
- 5: Seitenteil rechts von 2
- 6: Flansch links an 3
- 7: Flansch rechts an 3
- 8: Anschlussfläche an 6
- 9: Anschlussfläche an 7
- 10: Quersteg oben an 3
- 11: Quersteg unten an 3
- 12: Vertikalsteg an 3
- 13: Anschlussflansch an 4
- 14: Anschlussflansch an 5
- 15: Haltebock an 4
- 16: Haltebock an 5
- 17: Abstützplateau an 4
- 18: Abstützplateau an 5
- 19: Anlageflächen an 3 für 20
- 20: Konsole an 3
- 21: Lagerwangen oben an 20

## Patentansprüche

1. Starrachse eines Fahrzeugs, insbesondere liftbare Vor- oder Nachlaufachse eines Lastkraftwagens oder Omnibusses, mit einem Achskörper (2), der in seinem Mittelbereich (3) nach unten ausgebuchtet und dort von einer zu einer benachbarten angetriebenen Achse führenden Antriebswelle (1) mit Abstand überquert ist, und der über zwei untere Längslenker und einen oberen Dreieckslenker am Fahrgestellrahmen des Fahrzeugs angelenkt sowie über Federn und Dämpfer gegenüber letzterem abgestützt ist, **dadurch gekennzeichnet, dass** der Achskörper (2) aus drei Teilen (3, 4, 5) zusammengesetzt ist und zwar einem geschmiedeten oder gegossenen, als ein Joch gestalteten Mittelteil (3), das einen nach unten ausgebuchteten Mittelbereich und zwei in der Längsrichtung des Achskörpers ausgerichtete Enden aufweist, und zwei durch Rohrstücke gebildeten Seitenteilen (4, 5), die an den beiden Enden des Mittelteils (3) angeschweißt sind.

2. Starrachse nach Anspruch 1, **dadurch gekennzeichnet, dass** das aus z. B. hochfestem Stahlmaterial einstückig hergestellte Mittelteil (3) des Achskörpers (2) an seinen beiden Enden massive plattenförmige Flansche (6, 7) aufweist, deren Umfangsform und -größe jener der anzuschweißenden Seitenteile (4, 5) entspricht und deren Anschlussflächen (8, 9) für die Seitenteile (4, 5) parallel zueinander angeordnet sind.

3. Starrachse nach einem der vorhergehenden Ansprüche, **dadurch gekennzeichnet, dass** das Mittelteil (3) des Achskörpers (2) im Bereich zwischen den beiden Flanschen (6, 7) einen Doppel-T-Querschnitt mit oben und unten gegebenen Querstegen (10, 11) und einen Vertikalsteg (12) dazwischen oder einen nach unten offenen Rechteck-Querschnitt aufweist, bei Guss-Ausführung aber auch einen geschlossenen Rechteck-Querschnitt haben kann.

4. Starrachse nach einem der vorhergehenden Ansprüche, **dadurch gekennzeichnet, dass** die beiden durch Rohrstücke aus Stahlmaterial gebildeten Seitenteile (4, 5) des Achskörpers (2) ebenso wie die Flansche (6 ,7) an dessen Mittelteil (3) einen kreisrunden Querschnitt aufweisen.

5. Starrachse nach einem der vorhergehenden Ansprüche, **dadurch gekennzeichnet, dass** an jedem der beiden Seitenteile (4, 5) des Achskörpers (2)
- endseitig außen ein Anschlussflansch (13, 14), an dem ein Radträger befestigbar ist, und außerdem
- am Umfang an einer Stelle ein Haltebock (15, 16) für die Anlenkung eines unteren Längslenkers und an einer anderen Stelle ein Abstützplateau (17, 18) für eine Luftfeder
angeschweißt ist.

6. Starrachse nach einem der Ansprüche 1 bis 4, **dadurch gekennzeichnet, dass** am Mittelteil (3) des Achskörpers (2) Anlageflächen (19) für das durch Anschweißen oder Anschrauben erfolgende Anschließen einer nach oben abragenden Konsole (20) vorgesehen sind, die die Basis oder ein Mittel für das Anlenken des oberen Dreieckslenkers und das Anbauen eines Halters bildet, an welchem achskörperseitigen Halter ein unten an einem rahmenfesten Halter abgestützter Liftbalg oben für Heben und Senken der Starrachse abgestützt ist.

## Claims

1. Rigid axle of a vehicle, in particular a raisable front or trailing axle of a truck or bus, with an axle casing (2) that is recessed downwards in its central area (3) and is traversed there at a distance by an input shaft (1) that leads to an adjacent driven axle, and that is articulated via two lower longitudinal control arms and an upper wishbone on the chassis of the vehicle as well as being supported in relation to the chassis via springs and dampers, **characterised in that** the axle casing (2) is made up of three parts (3, 4, 5), namely a forged or cast central part (3) designed as a bay that has a downwards-recessed central area and two ends aligned in the longitudinal direction of the axle casing, and two side parts (4, 5), formed by pipe sections, that are welded onto the two ends of the central part (3).

2. Rigid axle according to claim 1, **characterised in that**, at each of its two ends, the central part (3) of the axle casing (2) produced in one piece from, for example, high-tensile steel material has solid plate-shaped flanges (6, 7) whose circumference shape and size corresponds to those of the side parts (4, 5) to be welded on, and whose connection surfaces (8, 9) for the side parts (4, 5) are arranged parallel to each other.

3. Rigid axle according to one of the preceding claims, **characterised in that** in the area between the two flanges (6, 7), the central part (3) of the axle casing (2) has a double-T cross-section with cross webs (10, 11) provided at the top and bottom and a vertical web (12) between them or a downwardly open rectangular cross-section, but may also have a closed rectangular cross-section in a cast embodiment.

4. Rigid axle according to one of the preceding claims, **characterised in that** the two side parts (4, 5) of the axle casing (2) that are formed by means of pipe sections made of steel material as well as the flanges (6, 7) on its central part (3) have a circular cross-section.

5. Rigid axle according to one of the preceding claims, **characterised in that** on each of the two side parts (4, 5) of the axle casing (2)
- at the end on the outside, a connecting flange (13, 14), on which a wheel carrier can be fastened, and also
- on the circumference at one point, a holding frame (15, 16) for articulation of a lower longitudinal control arm and at another point a support plateau (17, 18) for an air spring
is welded on.

6. Rigid axle according to one of claims 1 to 4, **characterised in that**, on the central part (3) of the axle casing (2), contact surfaces (19) are provided for the connection, effected through welding-on or screwing-on, of an upwards-protruding bracket (20) that forms the basis or a means for the articulation of the upper wishbone and the installation of a holder, on which axle-casing-side holder a lifting bellows supported at the bottom on a frame-mounted holder is supported at the top for raising and lowering the rigid axle.

## Revendications

1. Essieu rigide d'un véhicule, en particulier essieu poussé ou traîné relevable d'un camion ou d'un bus, avec un corps d'essieu (2), qui est courbé vers le bas dans sa partie centrale (3) et est traversé à distance à cet endroit par un arbre de transmission (1) conduisant à un essieu moteur voisin, et qui est articulé par le biais de deux bras de guidage longitudinaux inférieurs et d'un triangle de guidage supérieur sur le cadre de châssis du véhicule ainsi qu'en appui par rapport au cadre de châssis par le biais de ressorts et d'amortisseurs, **caractérisé en ce que** le corps d'essieu (2) se compose de trois pièces (3, 4, 5), à savoir d'une pièce centrale (3) forgée ou moulée, formée comme un joug, qui présente une partie centrale courbée vers le bas et deux extrémités orientées dans le sens longitudinal du corps d'essieu, et de deux pièces latérales (4, 5) formées d'éléments tubulaires, qui sont soudés aux deux extrémités de la pièce centrale (3).

2. Essieu rigide selon la revendication 1, **caractérisé en ce que** la pièce centrale (3) du corps d'essieu (2), fabriquée d'une seule pièce, par exemple, en acier très résistant, présente des brides (6, 7) massives en forme de plaque à ses deux extrémités, dont la forme et la taille de circonférence correspond à celles des pièces latérales (4, 5) à souder et dont les surfaces de raccordement (8, 9) destinées aux pièces latérales (4, 5) sont disposées parallèlement les unes par rapport aux autres.

3. Essieu rigide selon l'une des revendications mentionnées précédemment, **caractérisé en ce que** la pièce centrale (3) du corps d'essieu (2) présente, dans la partie située entre les deux brides (6, 7), une section transversale en double T avec des montants transversaux (10, 11) disposés en haut et en bas et un montant vertical (12) entre eux ou une section transversale rectangulaire ouverte vers le bas, mais, dans le cas de la version moulée, peut également avoir une section transversale rectangulaire fermée.

4. Essieu rigide selon l'une des revendications mentionnées précédemment, **caractérisé en ce que** les deux pièces latérales (4, 5) du corps d'essieu (2), formées d'éléments tubulaires en acier, ainsi que les brides (6, 7) de la pièce centrale (3) présentent une section transversale circulaire.

5. Essieu rigide selon l'une des revendications mentionnées précédemment, **caractérisé en ce qu'**à chacune des deux pièces latérales (4, 5) du corps d'essieu (2) sont soudés
- du côté de l'extrémité extérieure, une bride de raccordement (13, 14) sur laquelle peut être fixé un support de roue, et de plus
- à un endroit au niveau de la circonférence, un support de fixation (15, 16) pour l'articulation d'un bras de guidage longitudinal inférieur et, à un autre endroit, un plateau d'appui (17, 18) pour un coussin pneumatique.

6. Essieu rigide selon l'une des revendications 1 à 4, **caractérisé en ce que** des surfaces de montage (19) sont prévues au niveau de la pièce centrale (3) du corps d'essieu (2) pour le raccordement assuré par soudage ou vissage d'une console (20) dépassant vers le haut, qui forme la base ou un moyen pour articuler le triangle de guidage supérieur et monter un support et à ce support côté corps d'essieu vient en appui en haut un coussin pneumatique relevable en appui en bas sur un support fixé au cadre de châssis pour le relevage et l'abaissement de l'essieu rigide.
